# FASCICULE DE BREVET EUROPEEN

(11) **EP 0 599 748 B1**
(45) Date de publication et mention de la délivrance du brevet: **08.10.1997**
(21) Numéro de dépôt: 93420461.1
(22) Date de dépôt: 22.11.1993
(51) Int. Cl.: A61C 11/00

(54) **Articulateur dentaire à plaques de montage encliquetées**
Zahnärztlicher Artikulator mit eingerasteter Montageplatte
Dental articulator with snap locked mounting plate

(30) Priorité: 24.11.1992 FR 9214272; 10.02.1993 FR 9301694
(43) Date de publication de la demande: 01.06.1994
(73) Titulaire: GERBELOT-BARRILLON, Pierre, F-74300 Cluses (FR)
(72) Inventeur: GERBELOT-BARRILLON, Pierre, F-74300 Cluses (FR)
(74) Mandataire: Poncet, Jean-François

(56) Documents cités:
- DE-A- 2 922 045
- DE-A- 3 714 189
- DE-U- 7 900 692
- US-A- 3 510 947
- US-A- 4 319 875

## Description

La présente invention concerne les articulateurs pour l'art dentaire, utilisés pour la réalisation de travaux d'analyses occlusales et de prothèses dentaires.

Ces appareils permettent, en servant de support à des moulages de mâchoires inférieures et supérieures, de reproduire les mouvements mandibulaires.

On connaît notamment un tel articulateur décrit dans le document WO83/02223, comprenant un membre inférieur dont la partie antérieure forme une platine inférieure recevant une plaque amovible de montage inférieure destinée à supporter un moulage de mâchoire inférieure et supporte un plateau incisif, et dont la partie postérieure comprend deux branches latérales supportant chacune une boule condylienne. Les boules condyliennes forment rotules sur lesquelles s'articule un membre supérieur comportant un moyeu postérieur muni de logements appropriés pour enfermer les boules condyliennes. Le membre supérieur comporte une platine supérieure recevant une plaque amovible de montage supérieure destinée à supporter un moulage de mâchoire supérieure. La platine supérieure est solidaire du moyeu postérieur et sa partie antérieure reçoit une tige incisive venant en appui sur le plateau incisif.

Les plaques de montage inférieure et supérieure sont réalisées en métal, ainsi que les membres inférieur et supérieur. L'adaptation des plaques amovibles de montage se fait par introduction d'une vis solidaire d'une plaque de montage dans un alésage correspondant de la platine de membre inférieur ou supérieur, et par blocage de la vis dans l'alésage par un écrou. Par le fait que les pièces sont métalliques, le positionnement des plaques de montage peut être précis, de sorte que l'articulateur peut reproduire avec précision les mouvements mandibulaires des moulages de mâchoire fixés sur les plaques de montage.

Cet articulateur connu est réalisé en métal. La structure générale de cet articulateur n'est pas adaptée pour une réalisation en matériau plastique moulé.

L'inconvénient d'un tel articulateur métallique est son coût de production relativement élevé pour une production de masse en grande série. La précision nécessaire des mouvements mandibulaires nécessite en effet des usinages relativement précis, notamment pour l'adaptation des plaques de montage sur les platines correspondantes, et pour la réalisation de l'articulation du membre supérieur sur le membre inférieur.

Les solutions utilisées dans cet articulateur pour la fixation des plaques de montage ne sont pas transposables à un articulateur en matière plastique moulée.

Le document DE-A-29 22 045 décrit un articulateur dans lequel des plaques de montage amovibles sont fixées à la platine correspondante par des moyens d'accrochage comportant au moins :
- des moyens élastiques d'encliquetage réversible mâle-femelle, s'opposant aux efforts d'arrachement de la plaque de montage à l'écart de la platine correspondante,
- des moyens de centrage rigides, à engagement en coin, distincts des moyens d'encliquetage élastiques, s'opposant aux déplacements latéraux de la plaque de montage par rapport à la platine correspondante.

Le problème proposé par la présente invention est de concevoir une nouvelle structure d'articulateur dans laquelle sont prévus des moyens particuliers d'adaptation de plaques de montage sur les platines de membres inférieur et supérieur, ces moyens devant assurer une précision appropriée de positionnement des plaques de montage, précision suffisamment haute pour être compatible avec la haute définition des mouvements mandibulaires que l'articulateur doit reproduire, ces moyens devant être en outre compatibles avec une réalisation de pièces en matière plastique moulée.

L'invention a également pour avantage de simplifier la manipulation des plaques de montage, qui peuvent être adaptées sur l'articulateur ou retirées de l'articulateur sans manipulation longue et fastidieuse d'une vis ou d'un écrou de serrage.

L'invention a en outre pour avantage de simplifier la structure de l'articulateur, cette structure étant ainsi plus adaptée à une réalisation sous forme de pièces en matière plastique moulée.

Pour cela, la structure d'articulateur selon la présente invention reprend les principaux moyens du document DE-A-29 22 045, avec en outre des moyens de butée, s'opposant au mouvement de rapprochement de la plaque de montage en direction de la platine correspondante. Cette structure particulière est compatible avec une réalisation de la plaque de montage et des membres supérieur et inférieur en matière plastique moulée.

Selon un mode de réalisation, les moyens de centrage comprennent :
- un premier moyen de centrage, conformé pour s'opposer au déplacement latéral de la plaque de montage dans au moins une première direction,
- un second moyen de centrage, distinct du premier moyen de centrage, et conformé pour s'opposer au déplacement latéral de la plaque de montage dans une seconde direction.

Les première et seconde directions sont avantageusement sensiblement perpendiculaires l'une à l'autre.

Ces dispositions particulières de moyens de fixation, dans lesquelles des moyens spécialisés assurent chacun la solidarisation de la plaque de montage dans une direction privilégiée, assurent une grande précision de positionnement de la plaque de montage malgré les tolérances relativement larges de réalisation des pièces moulées en matière plastique.

Les parties mâles des moyens d'accrochage et de blocage de la plaque de montage sont placées de préférence sur la plaque elle-même, de façon que leur rupture éventuelle ne nécessite pas le remplacement d'un membre entier d'articulateur. La difficulté est alors que ces parties mâles ne doivent pas gêner le positionnement stable d'une plaque de montage retournée sur un plan de travail.

Pour cela, selon un mode de réalisation avantageux de l'invention :
- les moyens d'accrochage comportent des éléments proéminents dépassant de la face de maintien de plaque de montage,
- chaque plaque de montage comprend des éléments d'appui, dépassant de sa face de maintien selon une hauteur supérieure à celle des moyens d'accrochage, disposés de façon à échapper à la platine correspondante en position assemblée, et formant un appui stable lorsque la plaque de montage repose par ses éléments d'appui sur un plan de travail.

D'autres objets, caractéristiques et avantages de la présente invention ressortiront de la description suivante de modes de réalisation particuliers, faite en relation avec les figures jointes, parmi lesquelles :

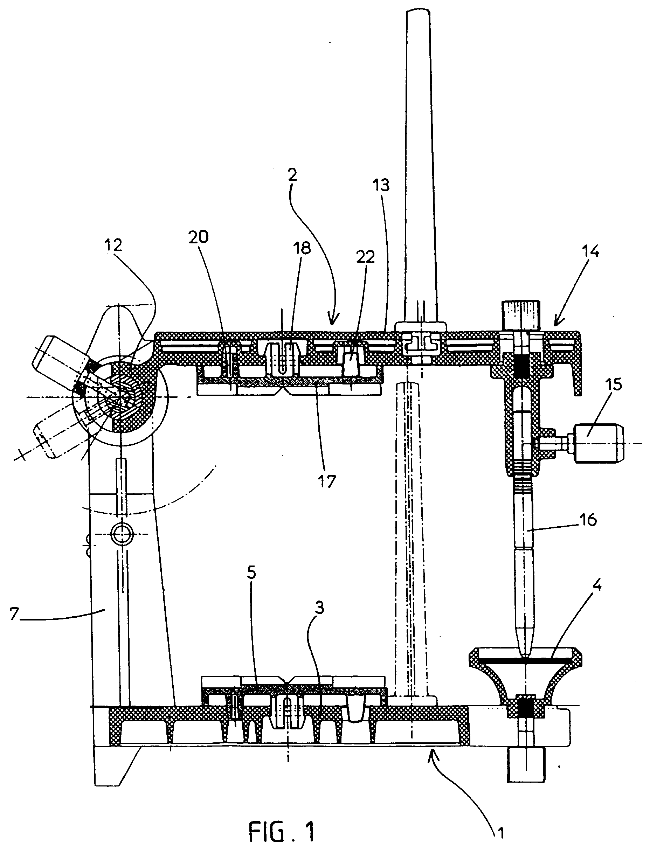

- la figure 1 est une vue de côté en coupe longitudinale d'un articulateur selon un mode de réalisation de la présente invention ;
- la figure 2 est une vue de dessus de l'articulateur de la figure 1 ;

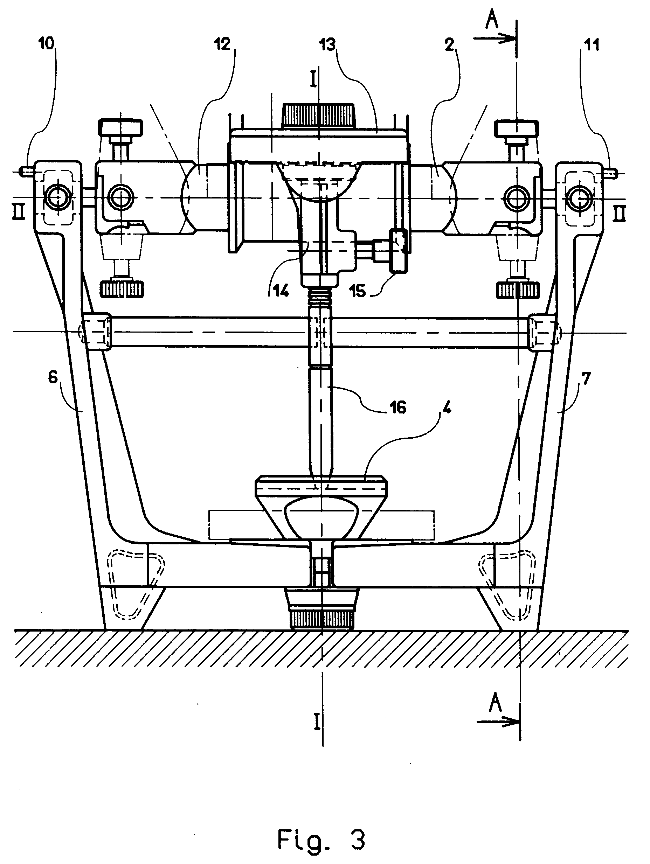

- la figure 3 est une vue de face de l'articulateur de la figure 1 ;
- la figure 4 est une vue de côté en coupe à plus grande échelle de la zone de plaque de montage supérieure selon un mode de réalisation préféré ;
- la figure 5 est une vue de côté en coupe à plus grande échelle de la zone de plaque de montage inférieure selon le mode de réalisation préféré ;
- la figure 6 est une vue de face en coupe de la zone de plaque de montage inférieure selon le mode de réalisation préféré de l'invention ; et
- la figure 7 illustre une plaque de montage selon le mode de réalisation de la figure 6, posée retournée sur un plan de travail.

Comme le représentent les figures, l'articulateur selon l'invention comprend de façon générale un membre inférieur 1 sur lequel s'articule un membre supérieur 2. Le membre inférieur 1 comprend une platine inférieure 3 dont la partie antérieure supporte un plateau incisif 4. La partie centrale de la platine inférieure 3 permet l'adaptation d'une plaque de montage inférieure 5. La partie postérieure de la platine inférieure 3 se raccorde à deux branches latérales verticales 6 et 7 dont les zones supérieures portent chacune une boule condylienne, respectivement 8 et 9.

Les boules condyliennes 8 et 9 sont disposées en regard l'une de l'autre et font saillie des faces intérieures des branches verticales 6 et 7.

Sur la partie extérieure des branches verticales 6 et 7 sont fixés deux axes de pivotement 10 et 11 qui correspondent à l'axe auriculaire et permettent l'adaptation d'un arc facial.

Le membre supérieur 2 est embrochable sur les boules condyliennes 8 et 9, et comporte pour cela un moyeu 12 solidaire d'une platine supérieure 13. La partie antérieure de la platine supérieure 13 comprend un dispositif de guidage et de blocage 14 comportant un canon d'axe vertical et une vis de blocage 15 transversale. Une tige incisive 16 peut être introduite et bloquée dans le canon pour venir en appui sur le plateau incisif 4 et maintenir en position de travail le membre supérieur 2, position dans laquelle la platine supérieure 13 est généralement parallèle à la platine inférieure 3.

La partie centrale de la platine supérieure 13 comporte un dispositif de positionnement sur lequel s'adapte une plaque de montage supérieure 17.

Les plaques de montage inférieure 5 et supérieure 17 sont destinées à supporter des moulages de mâchoire inférieure et supérieure respectivement.

Le moyeu 12 comporte, au voisinage de chacune de ses extrémités, des logements appropriés pour enfermer les boules condyliennes 8 et 9. Les deux logements du moyeu ont une disposition symétrique par rapport au plan antéro-postérieur médian I-I du dispositif, et sont agencés pour maintenir et guider le membre supérieur 2 au cours des mouvements reproduisant sensiblement les mouvements anatomiques de la mâchoire humaine.

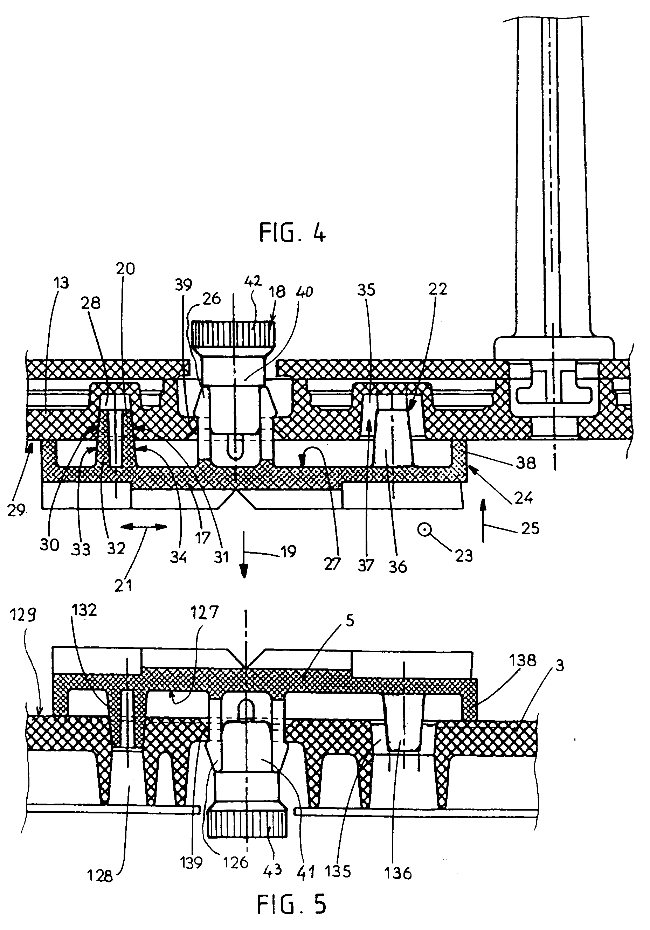

Comme le représente la figure 4, la plaque de montage supérieure 17 est fixée sur la platine supérieure 13 par un moyen élastique d'encliquetage 18, s'opposant aux efforts d'arrachement de la plaque de montage 17 à l'écart de la platine correspondante 13 comme le représente la flèche 19.

Un premier moyen de centrage 20 s'oppose aux déplacements latéraux de la plaque de montage 17 dans au moins une première direction représentée par la double flèche 21.

Un second moyen de centrage 22 s'oppose aux déplacements latéraux de la plaque de montage 17 dans une seconde direction représentée par le signe 23, cette seconde direction étant sensiblement perpendiculaire à la première direction 21 et parallèle au plan général de la platine supérieure 13.

Un moyen de butée 24 s'oppose aux mouvements de rapprochement de la plaque de montage 17 en direction de la platine correspondante 13, comme le représente la flèche 25.

Le moyen élastique d'encliquetage 18 comprend un ergot d'encliquetage 26, ménagé sur la face de maintien 27 de la plaque de montage 17 ou face destinée à venir contre la platine supérieure 13. Un trou d'encliquetage 39 est prévu dans la platine supérieure 13, pour recevoir à faible jeu l'ergot d'encliquetage 26 et le retenir après engagement, comme le représente la figure. L'ergot d'encliquetage 26 présente pour cela une structure cylindrique creuse à paroi latérale fendue depuis son extrémité, formant une série de languettes longitudinales élastiquement flexibles, à extrémité conique et à épaulement, l'épaulement venant s'engager derrière la paroi de platine supérieure 13 pour s'opposer à l'arrachement de la plaque de montage 17. La plaque peut toutefois être enlevée en exerçant une traction suffisante assurant la déformation élastique des languettes de l'ergot d'encliquetage 26.

Le premier moyen de centrage 20 comprend une première cavité 28, ménagée dans la platine supérieure 13 rigide et ouverte sur la face de réception 29 de platine recevant la plaque de montage 13. La première cavité 28 est avantageusement légèrement conique de révolution.

Le premier moyen de centrage 20 comprend en outre un premier ergot rigide de centrage 32, dépassant de la face de maintien 27 de la plaque de montage 13, le premier ergot de centrage 32 comportant une paroi latérale généralement conique de révolution selon l'angle d'inclinaison de la face latérale conique de cavité 28. Le premier ergot de centrage 32 s'adapte sans jeu dans ladite cavité 28.

Lorsque la plaque de montage 17 est en position sur la platine correspondante 13, les faces opposées 33 et 34 de paroi latérale du premier ergot de centrage 32 viennent en appui sans jeu contre les faces latérales correspondantes 30 et 31 de la cavité 28, interdisant ainsi tout déplacement de la plaque de montage 17 dans la première direction représentée par la flèche 21. En fait, dans ce mode de réalisation, la forme conique de la première cavité 28 et du premier ergot 32 interdit le déplacement latéral de la plaque de montage dans toutes les directions.

Le second moyen de centrage 22 comprend une seconde cavité 35 et un second ergot de centrage 36, décalés latéralement dans la première direction 21 par rapport au premier moyen de centrage 20. La seconde cavité 35 est allongée parallèlement à la première direction 21, et comporte deux faces latérales en coin sur lesquelles viennent s'engager deux parois latérales inclinées du second ergot de centrage 36. Ainsi, la seconde cavité 35 est allongée dans le sens de la première direction 21, laissant un jeu 37 dans le sens de cette première direction 21 entre la seconde cavité 35 et le second ergot correspondant 36. La seconde cavité 35 et le second ergot correspondant 36 s'opposent au déplacement latéral de la plaque de montage dans la seconde direction 23 sensiblement perpendiculaire à la première direction 21. Le jeu 37 facilite la fabrication par moulage des plaques de montage, car les tolérances dimensionnelles d'écartement entre les deux ergots 32 et 36 n'ont pas besoin d'être serrées. Le jeu 37 permet un déplacement latéral de la plaque de montage dans la première direction 21.

La plaque de montage 17 comprend une nervure périphérique 38 faisant saillie sur sa face de maintien 27, et venant en appui sur la face de réception correspondante 29 de la platine 13 pour former ledit moyen de butée 24.

Dans le mode de réalisation représenté sur la figure 4, le moyen d'encliquetage 18 et les deux moyens de centrage 20 et 22 sont avantageusement à l'écart de la nervure périphérique 38. On bénéficie ainsi des légères déformations par flexion élastique de la plaque de montage 17 pour provoquer l'engagement sans jeu des ergots de centrage 32 et 36 dans les cavités correspondantes 28 et 35.

Le moyen élastique d'encliquetage 18 est avantageusement disposé dans la zone centrale de plaque de montage 17, et les premier et second moyens de centrage 20 et 22 sont opposés de part et d'autre du moyen élastique d'encliquetage 18, comme le représente la figure.

Le moyen élastique d'encliquetage 18 est légèrement plus proche de l'un des deux moyens de centrage 20 ou 22. On réalise ainsi une position unique d'adaptation de la plaque de montage sur la platine correspondante.

Grâce à cette disposition des moyens de fixation, les plaques de montage 17 et 5 et les platines correspondantes 13 et 3 peuvent être réalisées en matière plastique moulée, tout en garantissant une précision suffisante de maintien et de positionnement de la plaque de montage sur la platine.

Sur la figure 5, on a représenté l'adaptation de la plaque de montage inférieure 5 sur la platine inférieure 3. On retrouve des moyens similaires de positionnement, qui sont repérés par des références numériques similaires, à savoir : un ergot élastique d'encliquetage 126, dépassant de la face de maintien 127 et s'engageant dans un trou d'encliquetage correspondant 139 ouvert sur la face de réception 129 de la platine inférieure 3, un premier ergot de centrage 132 dépassant de la face de maintien 127 et engagé dans une première cavité 128, un second ergot de centrage 136 dépassant de la face de maintien 127 et engagé dans une seconde cavité 135, et une nervure périphérique 138 faisant saillie également de la face de maintien 127, et venant en appui sur la face de réception correspondante 129 de la platine 3.

Selon une réalisation avantageuse, telle que représentée sur les figures 4 et 5, l'ergot d'encliquetage 26 ou 126 à structure cylindrique creuse est associé à une cale cylindrique correspondante respective 40 ou 41. Chaque cale 40 ou 41 est amovible et s'adapte en force dans le creux central de l'ergot d'encliquetage respectif 26 ou 126. Lorsque la cale est introduite, elle interdit le rapprochement des portions de paroi latérale d'ergot d'encliquetage, interdisant ainsi l'extraction de l'ergot de verrouillage hors de son trou correspondant 39 ou 139, assurant ainsi le verrouillage de la plaque de montage sur l'articulateur et empêchant tout mouvement axial de la plaque de montage 5 ou 17 respective. Pour sa manoeuvre, chaque cale est munie d'une tête de préhension respective 42 ou 43, et est accessible depuis la face extérieure de platine à l'opposé des plaques de montage, comme le représentent les figures 4 et 5.

Selon l'invention, les éléments proéminents mâles faisant partie des moyens d'accrochage de la plaque de montage sur la platine correspondante sont disposés de préférence sur la face de maintien correspondante 27 ou 127 de plaque de montage, comme le représentent les figures. La raison est que de tels moyens mâles sont susceptibles d'être dégradés plus facilement que les moyens femelles lors des manipulations, par suite de chocs, de sorte que si un moyen mâle est cassé, il suffit de changer de plaque de montage, sans avoir à modifier la platine correspondante ou le membre entier de l'articulateur.

Lors de leur utilisation, les plaques de montage doivent être soit adaptées sur la platine correspondante par les moyens d'accrochage, soit retournées et posées sur un plan de travail selon leur face de maintien. Dans cette dernière position posée sur un plan de travail, les éléments mâles d'accrochage constituent alors une gêne, empêchant que la plaque repose sur le plan en position stable.

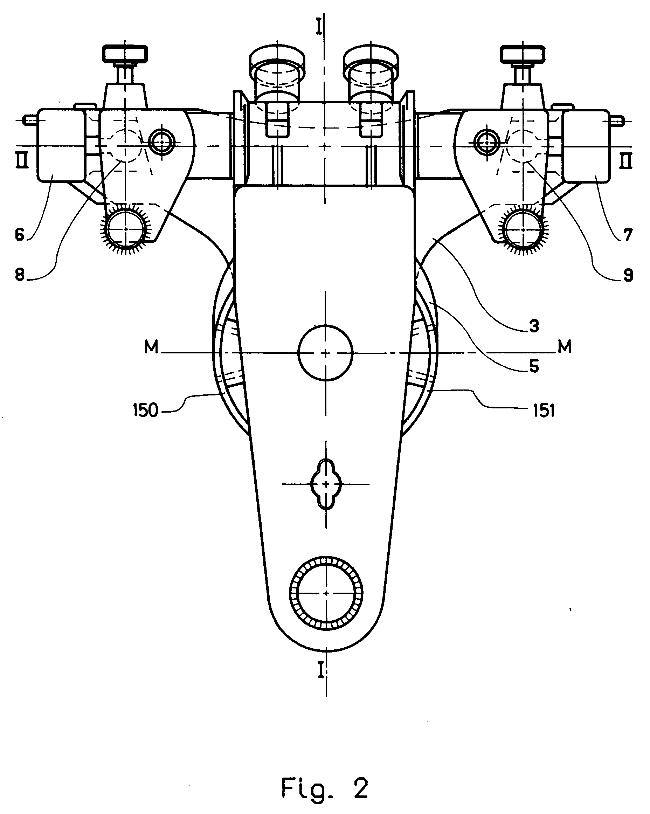

Pour cela, selon un mode de réalisation avantageux de l'invention, et comme le représentent plus particulièrement les figures 2, 6 et 7, chaque plaque de montage comprend des éléments d'appui tels que les éléments latéraux 150 et 151, dépassant de sa face de maintien selon une hauteur H1 supérieure à la hauteur H2 des moyens d'accrochage mâles. Les éléments d'appui 150 et 151 sont disposés pour échapper à la platine correspondante en position assemblée, de sorte qu'ils ne s'opposent pas au rapprochement de la plaque de montage vers la platine. Enfin, les éléments d'appui 150 et 151 sont conformés pour réaliser un appui stable lorsque la plaque de montage repose par ces éléments d'appui sur un plan de travail 155.

Comme le représentent les figures, dans la zone de réception de plaque de montage, telle que la plaque inférieure 5, la platine correspondante telle que la platine inférieure 3 a une largeur inférieure à la largeur de la plaque de montage 5. Les éléments d'appui 150 et 151 sont alors disposés aux extrémités latérales de la plaque de montage 5, et viennent s'engager de part et d'autre des chants latéraux respectifs 152 et 153 de la platine 3.

On peut prévoir de tels éléments d'appui 150 et 151 sous diverses formes, par exemple un ensemble d'au moins quatre tiges ou colonnes d'appui formant un quadrilatère d'appui stable. Toutefois, dans le mode de réalisation représenté sur les figures, les éléments d'appui 150 et 151 comprennent avantageusement deux portions de nervures en arc longeant les bords latéraux de la face de maintien 27 ou 127 de plaque de montage 17 ou 5, et dépassant de part et d'autre du plan transversal médian M-M de la plaque de montage 5.

De préférence, en position d'assemblage telle que représentée sur la figure 2, les extrémités des nervures en arc formant les éléments d'appui 150 et 151 viennent en appui contre les chants 152 et 153 de la platine correspondante 3 ou 13 d'articulateur, participant ainsi au maintien transversal et au blocage en rotation de la plaque de montage 5 ou 17.

Comme représenté, les chants 152 et 153 de la platine 3 sont avantageusement divergents dans la zone d'assemblage de plaque de montage 5. De cette façon, les nervures en arc formant les éléments d'appui 150 et 151 autorisent le montage de la plaque de montage 5 dans un seul sens, empêchant un montage erroné.

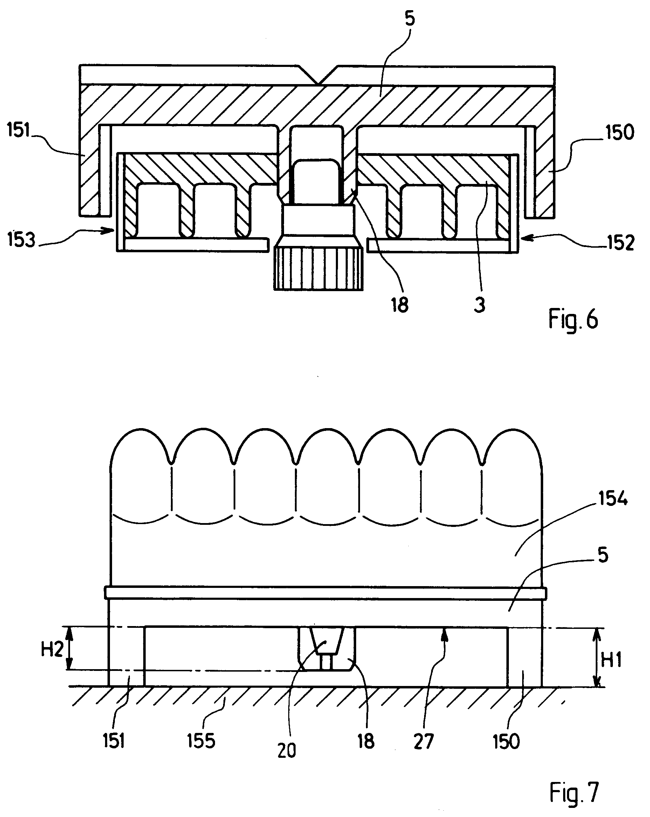

Sur la figure 6, on voit que les éléments d'appui 150 et 151 ne s'opposent pas à l'assemblage de la plaque de montage 5 sur la platine 3, tandis que sur la figure 7 ils assurent un appui stable de la plaque de montage 5 renversée et posée sur un plan de travail 155, permettant le travail sur un moulage 154 fixé sur la plaque de montage 5.

## Revendications

1. Appareil articulateur pour l'art dentaire, notamment pour la réalisation de travaux d'analyses occlusales et de prothèses dentaires, comprenant un membre inférieur (1) dont la partie antérieure forme une platine inférieure (3) recevant une plaque amovible de montage inférieure (5) destinée à supporter un moulage de mâchoire inférieure, et dont la partie postérieure comprend deux branches latérales (6, 7) sur lesquelles s'articule un membre supérieur (2) comportant une platine supérieure (13) recevant une plaque amovible de montage supérieure (17) destinée à supporter un moulage de mâchoire supérieure,
dans lequel chacune des plaques amovibles de montage inférieure (5) et supérieure (17) est fixée à la platine correspondante (3, 13) selon une face de maintien par des moyens d' accrochage comportant au moins :
- des moyens élastiques d'encliquetage (18) réversible mâle-femelle, s'opposant aux efforts d'arrachement (19) de la plaque de montage (5, 17) à l'écart de la platine correspondante (3, 13),
- des moyens de centrage rigides (20, 22), à engagement en coin, distincts des moyens d'encliquetage élastiques (18), s'opposant aux déplacements latéraux de la plaque de montage (5, 17) par rapport à la platine correspondante (3, 13),
caractérisé en ce que les moyens d'accrochage comportent :
- des moyens de butée (24), s'opposant aux mouvements de rapprochement (25) de la plaque de montage (5, 17) en direction de la platine correspondante (3, 13).

2. Articulateur selon la revendication 1, caractérisé en ce que les moyens de centrage comprennent :
- un premier moyen de centrage (20), conformé pour s'opposer au déplacement latéral de la plaque de montage (5, 17) dans au moins une première direction (21),
- un second moyen de centrage (22), distinct du premier moyen de centrage (20), et conformé pour s'opposer au déplacement latéral de la plaque de montage (5, 17) dans une seconde direction (23).

3. Articulateur selon la revendication 2, caractérisé en ce que les moyens de centrage comprennent :
- des cavités (28, 128) ménagées dans la platine (13, 3) et ouvertes sur la face de réception (29, 129) de platine recevant la plaque de montage correspondante, lesdites cavités (28, 128) comportant des faces latérales (30, 31) d'appui,
- des ergots de centrage (32, 132), ménagés sur la face de maintien (27, 127) de la plaque de montage (17, 5), comportant des parois latérales (33, 34) conformées pour venir en appui sans jeu contre les faces latérales (30, 31) de cavité (28, 128) lorsque la plaque de montage (17, 5) est en position sur la platine correspondante (13, 3).

4. Articulateur selon l'une quelconque des revendications 1 à 3, caractérisé en ce que les moyens élastiques d'encliquetage (18) comprennent :
- un ergot d'encliquetage (26, 126) ménagé sur la face de maintien (27, 127) de la plaque de montage (17, 5),
- un trou d'encliquetage (39, 139) ménagé sur la platine correspondante (13, 3).

5. Articulateur selon la revendication 4, caractérisé en ce que :
- l'ergot d'encliquetage (26, 126) est disposé dans la zone centrale de plaque de montage (17, 5),
- les premier et second moyens de centrage (20, 22) sont opposés de part et d'autre du moyen élastique d'encliquetage (18), et le moyen élastique d'encliquetage (18) est plus proche de l'un des des moyens de centrage (20, 22).

6. Articulateur selon l'une des revendications 4 ou 5, caractérisé en ce que l'ergot d'encliquetage (26, 126) présente une structure cylindrique creuse à paroi latérale fendue depuis son extremité, et en ce qu'il est associé à une cale cylindrique (40, 41) amovible s'adaptant en force dans le creux de l'ergot d'encliquetage pour interdire le rapprochement des portions de paroi latérale et pour assurer ainsi le verrouillage de la plaque de montage (5, 17) sur l'articulateur en empêchant tout mouvement axial de la plaque de montage (5,17).

7. Articulateur selon l'une quelconque des revendications 1 à 6, caractérisé en ce que :
- le premier moyen de centrage (20) est conformé pour s'opposer au déplacement latéral de la plaque de montage (5,17) dans toutes les directions,
- le second moyen de centrage (22) est décalé latéralement dans la première direction (21) par rapport au premier moyen de centrage (20) et est conformé pour s'opposer au déplacement latéral de la plaque de montage (5,17) dans une direction (23) sensiblement perpendiculaire à la première direction (21), et pour permettre le déplacement latéral de la plaque de montage (5,17) dans ladite première direction (21).

8. Articulateur selon l'une quelconque des revendications 1 à 7, caractérisé en ce que les plaques de montage (17, 5) comprennent des nervures périphériques (38, 138) faisant saillie sur leur face de maintien (27, 127), venant en appui sur la face correspondante (29, 129) des platines (13, 3), pour former lesdits moyens de butée (24).

9. Articulateur selon l'une quelconque des revendications 1 à 8, caractérisé en ce que :
- les moyens d'accrochage comportent des éléments proéminents dépassant de la face de maintien (27, 127) de plaque de montage (17, 5),
- chaque plaque de montage comprend des éléments d'appui (150, 151), dépassant de sa face de maintien (27, 127) selon une hauteur (H1) supérieure à celle (H2) des moyens d'accrochage, disposés de façon à échapper à la platine correspondante (3, 13) en position assemblée, et formant un appui stable lorsque la plaque de montage (5, 17) repose par ses éléments d'appui (150, 151) sur un plan de travail.

10. Articulateur selon la revendication 9, caractérisé en ce que les éléments d'appui (150, 151) comprennent deux portions de nervures en arc longeant les bords latéraux de la face de maintien (27, 127) de plaque de montage (17, 5), et dépassant de part et d'autre du plan transversal médian (M-M) de la plaque de montage (17, 5).

11. Articulateur selon la revendication 10, caractérisé en ce que, en position d'assemblage, les extrémités des nervures en art (150, 151) viennent en appui contre les chants (152, 153) de la platine correspondante (3, 13) d'articulateur, participant ainsi au maintien transversal et au blocage en rotation de la plaque de montage (5, 17).

12. Articulateur selon la revendication 11, caractérisé en ce que les chants (152, 153) de la platine (3, 13) sont divergents dans la zone d'assemblage de plaque de montage, de sorte que les nervures en arc (150, 151) autorisent le montage de la plaque de montage dans un seul sens.

13. Articulateur selon l'une quelconque des revendications 1 à 12, caractérisé en ce que les platines (13, 3) et les plaques de montage (17, 5) sont réalisées en matière plastique moulée.

## Claims

1. Dental articulator device, in particular for occlusion analysis and dental prosthesis work, including a lower member (1) the anterior part of which forms a lower plate (3) receiving a removable lower mounting plate (5) adapted to support a lower jaw cast and the posterior part of which includes two lateral branches (6, 7) to which is articulated an upper member (2) including an upper plate (13) receiving a removable upper mounting plate (17) adapted to support an upper jaw cast, wherein a holding face of each of the lower (5) and upper (17) removable mounting plates is fixed to the corresponding plate (3, 13) by attachment means including at least:
- male-female reversible spring clip means (18) opposing forces (19) pulling the mounting plate (5, 17) away from the corresponding plate (3, 13),
- wedge type rigid centring means (20, 22) separate from the spring clip means (18) and opposing lateral movements of the mounting plate (5, 17) relative to the corresponding plate (3, 13),
characterised in that the attachment means include:
- abutment means (24) opposing movements (25) of the mounting plate (5, 17) towards the corresponding plate (3, 13).

2. Articulator according to claim 1 characterised in that the centring means include:
- first centring means (20) shaped to oppose lateral displacement of the mounting plate (5, 17) in at least a first direction (21),
- second centring means (22) separate from the first centring means (20) and adapted to oppose lateral displacement of the mounting plate (5, 17) in a second direction (23).

3. Articulator according to claim 2 characterised in that the centring means include:
- cavities (28, 128) formed in the plate (13, 3) and opening onto the plate receiving face (29, 129) receiving the corresponding mounting plate, said cavities (28, 128) including lateral bearing faces (30, 31),
- centring lugs (32, 132) formed on the holding face (27, 127) of the mounting plates (17, 5), including lateral walls (33, 34) adapted to bear without clearance against the lateral faces (30, 31) of the cavities (28, 128) when the mounting plate (17, 5) is in position on the corresponding plate (13, 3).

4. Articulator according to any one of claims 1 to 3 characterised in that the spring clip means (18) include:
- a clipping lug (26, 126) formed on the holding face (27, 127) of the mounting plate (17, 5),
- a clipping hole (39, 139) formed on the corresponding plate (13, 3).

5. Articulator according to claim 4 characterised in that:
- the clipping lug (26, 126) is disposed in the central area of the mounting plate (17, 5),
- the first and second centring means (20, 22) are on respective opposite sides of the spring clip means (18) and the spring clip means (18) are nearer one of the two centring means (20, 22).

6. Articulator according to claim 4 or claim 5 characterised in that the clipping lug (26, 126) has a hollow cylindrical structure with a lateral wall split from its end and in that it is associated with a removable cylindrical spacer (40, 41) forcibly inserted in the hollow of the clipping lug to prevent movement towards each other of the lateral wall portions and thereby to assure the locking of the mounting plate (5, 17) on the articulator by preventing any axial movement of the mounting plate (5, 17).

7. Articulator according to any one of claims 1 to 6 characterised in that:
- the first centring means (20) are adapted to oppose lateral displacement of the mounting plate (5, 17) in all directions,
- the second centring means (22) are offset laterally in the first direction (21) relative to the first centring means (20) and adapted to oppose lateral displacement of the mounting plate (5, 17) in a direction (23) substantially perpendicular to the first direction (21) and to allow lateral displacement of the mounting plate (5, 17) in said first direction (21).

8. Articulator according to any one of claims 1 to 7 characterised in that the mounting plates (17, 5) include peripheral ribs (38, 138) projecting from their holding face (27, 127) and bearing on the corresponding face (29, 129) of the plates, (13, 3) to form said abutment means (24).

9. Articulator according to any one of claims 1 to 8 characterised in that:
- the attachment means include prominent members projecting from the holding face (27, 127) of the mounting plate (17, 5),
- each mounting plate includes bearing members (150, 151) projecting from its holding face (27, 127) to a height (H1) greater than that (H2) of the attachment means, disposed so as to escape from the corresponding plate (3, 13) in the assembled position, and forming a stable bearing when the mounting plate (5, 17) rests with its bearing members (150, 151) on a worksurface.

10. Articulator according to claim 9 characterised in that the bearing members (150, 151) comprise two arcuate rib portions running along the lateral edges of the holding face (27, 127) of the mounting plate (17, 5) and extending both sides of the median transverse plane (M-M) of the mounting plate (17, 5).

11. Articulator according to claim 10 characterised in that, in the assembled position, the ends of the arcuate ribs (150, 151) bear against the edges (152, 153) of the corresponding articulator plate (3, 13), so contributing to transverse retention and rotational immobilisation of the mounting plate (5, 17).

12. Articulator according to claim 11 characterised in that the edges (152, 153) of the plate (3, 13) are divergent in the mounting plate fitting area so that the arcuate ribs (150, 151) allow the mounting plate to be fitted in only one orientation.

13. Articulator according to any one of claims 1 to 12 characterised in that the plates (13, 3) and the mounting plates (17, 5) are made of moulded plastics material.

## Patentansprüche

1. Artikulator für die Zahntechnik, insbesondere zur Ausführung von okklusionsanalysen und zur Anfertigung von Zahnprothesen, umfassend ein Unterteil (1), dessen vorderer Bereich einen unteren Tisch (3) bildet, welcher eine abnehmbare, untere Montierplatte (5) für die Aufnahme eines Unterkiefermodells trägt, und dessen hinterer Bereich zwei seitliche Säulen (6, 7) hat, an denen ein Oberteil (2) schwenkbar angelenkt ist, das einen oberen Tisch (13) hat, welcher eine abnehmbare, obere Montierplatte (17) zur Aufnahme eines Oberkiefermodells trägt, wobei sowohl die obnehmbare, untere Montierplatte (5) als auch die abnehmbare, obere Montierplatte (17) an dem entsprechenden Tisch (3, 13) über eine Abstützseits mit Hilfe von Kupplungsorganen fixiert sind, die wenigstens aufweisen:
- zweiseitige, ineinander eingreifende, elastische Rastmittel (18), die Zugkräften (19) entgegenwirken, durch welche die flohtierplatte (5, 17) von dem zugehörigen Tisch (3, 13) gelöst würde,
- starre Zentrierorgane (20, 22) mit Keileingriff, die von den elastischen Rastmitteln (18) verschieden sind und seitlichen Verschiebungen der Montierplatte (5, 17) relativ zu dem entsprechenden Tisch (3, 13) entgegenwirken,
dadurch gekennzeichnet, daß die Kupplungsorgane Anschlagorgane (24) aufweisen, die Näherungsbewegungen (25) der Montierplatte (5, 17) in Richtung auf den zugehörigen Tisch (3, 13) entgegenwirken.

2. Artikulator nach Anspruch 1, dadurch gekennzeichnet, daß die Zentrierorgane umfassen:
- ein erstes Zentrierorgan (20), das so ausgebildet ist, daß es einer Seitenverschiebung der Montierplatte (5, 17) in wenigstens einer ersten Richtung (21) entgegenwirkt,
- ein zweites Zentrierogan (22), das von dem ersten Zentrierorgan (20) verschieden und so ausgebildet ist, daß es einer Seitenverschiebung der Montierplatte (5, 17) in einer zweiten Richtung (23) entgegenwirkt.

3. Artikulator nach Anspruch 2, dadurch gekennzeichnet, daß die Zentrierorgone aufweisen:
- Aussparungen (28, 128), die in den Tisch (13, 3) eingearbeitet und auf der Empfangsseite (29, 129) des Tisches offen sind, an der die entsprechende Montierplatte anliegt, wobei die Aussparungen (28, 128) seitliche Anschlagflächen (30, 31) haben,
- Zentriervorsprünge (32, 132), die an der Abstützseite (27, 127) der Montierplatte (17, 5) ausgebildet sind und Seitenflächen (33, 34) haben, die spielfrei an den seitlichen Anschlagflächen (30, 31) der Aussparungen (28, 128) zur Anlage kommen, wenn sich die Montierplatte (17, 5) in ihrer Stellung an dem entsprechenden Tisch (13, 3) befindet.

4. Artikulator nach einem der Ansprüche 1 bis 3, dadurch gekennzeichnet, daß die elastischen Rastmittel (18) umfassen:
- einen Rastvorsprung (26, 126), der an der Abstützseite (27, 127) der Montierplatte (17, 5) ausgebildet ist,
- eine Rastöffnung (39, 139), die in den zugehörigen Tisch (13, 3) eingearbeitet ist.

5. Artikulator nach Anspruch 4, dadurch gekennzeichnet, daß
- der Rastvorsprung (26, 126) im mittleren Bereich der Montierplatte (17, 5) ausgebildet ist,
- das erste und das zweite Zentrierorgan (20, 22) auf einander gogenüberliegenden Seiten des elastischen Rastmittels (18) angeordnet sind, welches sich näher an einem der beiden Zentrierorgane (20, 22) befindet.

6. Artikulator nach Anspruch 4 oder 5, dadurch gekennzeichnet, daß der Rastvorsprung (26, 126) eine zylindrische Hohlform mit bis zu ihrem Ende geschlitzter Seitenwand aufweist und daß dem Rastvorsprung (26, 126) ein zylindrischer, abnehmbare Stopfen (40, 41) zugeordnet ist, der kraft- und formschlüssig in den Hohlraum des Rastvorsprunges eingesetzt ist, um Näherungsbewegungen der Abschnitte der Seitonwand zu verhindern und dadurch die Verriegelung der Montierplatte (5, 17) am Artikulator zu sichern und jeder Axialbewegung der Montierplatte (5, 17) entgegenzuwirken.

7. Artikulator nach einem der Ansprüche 1 bis 6, dadurch gekennzeichnet, daß
- das erste Zentrierorgan (20) so ausgebildet ist, daß es eine seitliche Verschiebung der Montierplatte (5, 17) in allen Richtungen verhindert,
- das zweite Zentrierorgan (22) in der ersten Richtung (21) seitlich zu dem ersten Zentrierorgan (20) versetzt und so ausgebildet ist, daß es eine seitliche Verschiebung der Montierplatte (5, 17) in einer Richtung (23) verhindert, die im wesentlichen rechtwinklig zur ersten Richtung (21) verläuft, während es eine seitliche Verschiebung der Montierplatte (5, 17) in der ersten Richtung (21) erlaubt.

8. Artikulator nach einen der Ansprüche 1 bis 7, dadurch gekennzeichnet, daß die Montierplatten (17, 5) außen umlaufende Rippen (38, 138) haben, die von ihrer Abstützseite (27, 127) so abstehen, daß sie an der zugehörigen Oberfläche (29, 129) der Tische (13, 3) anliegen und dadurch die Anschlagorgane (24) bilden.

9. Artikulator nach einen der Ansprüche 1 bis 8, dadurch gekennzeichnet, daß
- die Kupplungsorgane von der Abstützseite (27, 127) der Montierplatte (17, 5) abstehende Elemente aufweisen,
- jede Montierplatte Stützelemente (150, 151) aufweist, die sich von ihrer Abstützseite (27, 127) ausgehend über eine Höhe (H1) erstrecken, die größer als die Höhe (H2) der Kupplungsorgane ist, wobei die Stützelemente (150, 151) so angeordnet sind, daß sie im zusammengebauten Zustand über den zugehörigen Tisch (3, 13) hinausstehen und eine stabile Auflage bilden, wenn die Montierplatte (5, 17) mit ihren Stützelementen (150, 151) auf einer Arbeitsebene steht.

10. Artikulator nach Anspruch 9, dadurch gekennzeichnet, daß die Stützelemente (150, 151) aus zwei bogenförmigen Rippenteilen bestehen, die die seitlichen Ränder der Abstützseite (27, 127) der Montierplatte (17, 5) entlang gehen und von beiden Seiten der Quermittelebene (M-M) der Montierplatte (17, 5) ausgehen.

11. Artikulator nach Anspruch 10, dadurch gekennzeichnet, daß im zusammengebauten Zustand die Enden der bogenförmigen Rippen (150, 151) an den Kanton (152, 153) des zugehörigen Tisches (3, 13) des Artikulators anliegen und damit zur Querhalterung und drehfesten Fixierung der Montierplatte (5, 17) beitragen.

12. Artikulator nach Anspruch 11, dadurch gekennzeichnet, daß die Kanten (152, 153) des Tisches (3, 13) im Verbindungsbereich der Montierplatte divergieren, so daß die bogenförmigen Rippen (150, 151) eine Montage der Montierplatte in nur einer Richtung erlauben.

13. Artikulator nach einem der Ansprüche 1 bis 12, dadurch gekennzeichnet, daß die Tische (13, 3) und die Montierplatten (17, 5) Kunststoff-Gußteile sind.
